# EUROPEAN PATENT SPECIFICATION

(11) **EP 0 315 346 B1**
(45) Date of publication and mention of the grant of the patent: **10.02.1993**
(21) Application number: 88309951.7
(22) Date of filing: 21.10.1988
(51) Int. Cl.: F16G 13/06, F16G 5/18

(54) **Cambered pin CVT chain-belt**
Gliederkette für stufenlos regelbare Getriebe mit gekrümmten Gelenkstücken
Courroie à maillons pour transmission continûment variable à pivot cambré

(30) Priority: 28.10.1987 US 114335
(43) Date of publication of application: 10.05.1989
(60) Divisional application: 91110852.0
(73) Proprietor: BORG-WARNER AUTOMOTIVE TRANSMISSION AND ENGINE COMPONENTS CORPORATION, Sterling Heights, Michigan 48311-8022 (US)
(72) Inventor: Ivey, John Saxon, Ithaca New York 14850 (US); Clauss, Julius Alphonse, Ithaca New York 14850 (US); Bateman, Paul Mario, Freeville New York 13068 (US); Cole, Edward Hutchinson, Jr., Ithaca New York 14850 (US); Mott, Philip James, Dryden New York 13053 (US)
(74) Representative: Williams, Trevor John

(56) References cited:
- EP-A- 0 109 202
- EP-A- 0 309 231
- GB-A- 686 714
- GB-A- 859 533
- GB-A- 2 018 387
- GB-A- 2 178 130
- GB-A- 2 185 300
- US-A- 2 067 243
- US-A- 2 096 061
- US-A- 2 324 640
- US-A- 3 939 721
- US-A- 4 767 388
- PATENT ABSTRACTS OF JAPAN, vol. 11, no. 318 (M-632)(2765), October 16, 1987

## Description

The present invention relates to a chain belt, and more particularly to a pivot joint for articulation between adjacent sets of chain links in a chain-belt. Various types of pivot means have been utilized for the joining and articulation of chain links, such as cylindrical pivot pins, pin and rocker, etc. wherein the chain links are provided in sets that are interleaved together and have aligned apertures in the links that receive the pivot means. The chain links articulate as the chain wraps around a pulley or sprocket for the chain.

Chain links which are used for the manufacture of chain-belts, combining a chain and a plurality of load blocks, are especially suitable to provide a driving connection between a pair of pulleys, resulting in a variable ratio drive transmission. The load blocks are positioned on the chain between the spaced pivot means and have one or more windows therein receiving the chain links extending therethrough. The load blocks have tapered outer or end surfaces which engage the sheave faces of the pulleys to provide the driving engagement between the pulleys and the chain-belt.

For a single round pin as the pivot means, the ends of the pins could be headed or swaged beyond the outside or guide chain links at both ends of the pin or the guide links could have slightly smaller apertures to provide a force fit with the ends of the pin. In some forms of power transmission chain using a pair of similar pins or a pin and rocker, one of the pin members is longer than the other, and the shorter member is retained in position by guide links flanking the edges of the chain; the guide link having apertures only large enough to receive the longer of the pin members. Then the longer of the pins is press-fit or otherwise secured in the guide link aperture.

Another method of limiting lateral movement of the pins or pin and rocker pivot means is through the use of a locking clip or spring clip. For a locking clip, the ends of the pins or pin and rocker have grooves located slightly beyond the chain links, and a clip engages in the groove or grooves to retain the pins intact. Such a locking clip is shown in US Patent No 3 939 721. Where a spring clip is used, a resilient retaining clip extends across the width of the chain when downturned ends that extend over the ends of the pins or pin and rocker and are bent inward below the pin ends as seen in Figure 9 of US Patent No 4 507 106. One problem with either locking clips or spring clips is that clips are difficult to assemble and are prone to breakage, leaving the pins free to move laterally in the links sets. The present invention overcomes the problems relative to retaining the pivot pins in a chain-belt without adding any additional structure thereto.

GB-A-2 185 300 discloses a power transmission chain belt in accordance with the prior art portion of claim 1. This prior construction also requires the use of an interference fit or other suitable means for retaining the pivot pins in the link sets.

The present invention as defined in claim 1 relates to a chain-belt comprising interleaved sets of a plurality of chain links having spaced apertures wherein the apertures of adjacent sets of links are laterally aligned to receive the pins of a joint for articulation of the chain. A small longitudinally extending bow is introduced into at least one of the pins which, when assembled, creates a spring load between the pins and links, which load is sufficient to retain the pins in their operative position during assembly and handling of the chain-belt. The use of the bow for the pins obviates the need for locking clips and a press fit between the pins and guide link is not necessary.

In its preferred form, the present invention also relates to the chain-belt consisting of interleaved sets of chain links having spaced apertures for pivot means, wherein each link has a pair of oppositely disposed tabs adjacent one end of each link; the links in a lateral set having the tabs at alternating ends. Also, the spaced apertures in each link have a generally hour-glass shape with the pins received in the rounded ends of the apertures and the narrowed central portion located between the pins. The load blocks encircling the sets of links are located between adjacent tabs on the interleaved links; the tabs preventing undue rocking action by the load blocks and thus decreased wear on the edges of the links.

Another preferred feature is the use of two reduced-width links in the outermost positions of a set of interleaved links, to save metal without sacrificing any torque-carrying capacity of the chain-belt.

In the accompanying drawings:
Figure 1 is a cross-sectional illustration of a variable ratio pulley transmission showing one speed ratio position, the pulleys being joined by a chain-belt embodying the present invention.
Figure 2 is a side elevational view of a portion of the chain-belt connecting the pulleys in Figure 1 and incorporating the rocker joint of the present invention.
Figure 3 is a top plan view of a portion of the chain-belt of Figure 2.
Figure 4 is a cross-sectional view of the chain-belt taken on the line 4-4 of Figure 2.
Figure 5 is an enlarged partial side elevational view with portions removed to show details of the chain links and rocker joint.
Figure 6 is a horizontal cross sectional view through a portion of the chain-belt taken on line 6-6 of Figure 5.
Figure 7 is an enlarged perspective view of the bowed pins removed from the chain-belt.

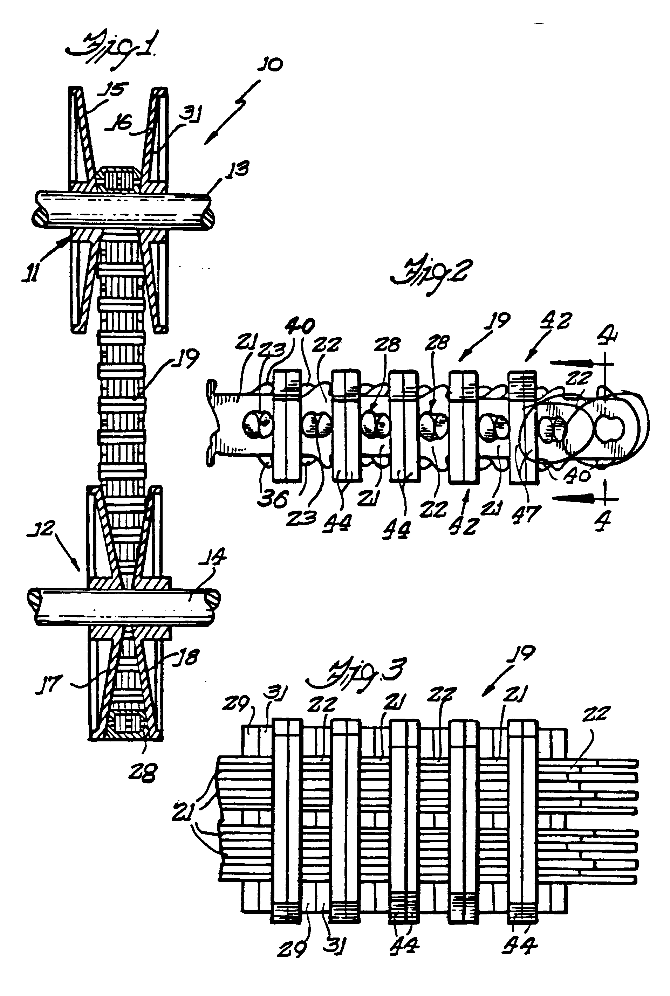

Referring more particularly to the disclosure in the drawings wherein is shown an illustrative embodiment of the present invention, Figure 1 discloses a variable pulley transmission 10 comprising a pair of pulleys 11,12 mounted on shafts 13,14, respectively. Each pulley includes a pair of flanges 15,16 or 17,18 drivingly connected by a chain-belt 19. One of the shafts is a driving shaft and the other is a driven shaft, and at least one flange of each pulley is movable axially relative to the opposite flange of the pair to vary the spacing between the flanges and thus vary the drive ratio of the transmission.

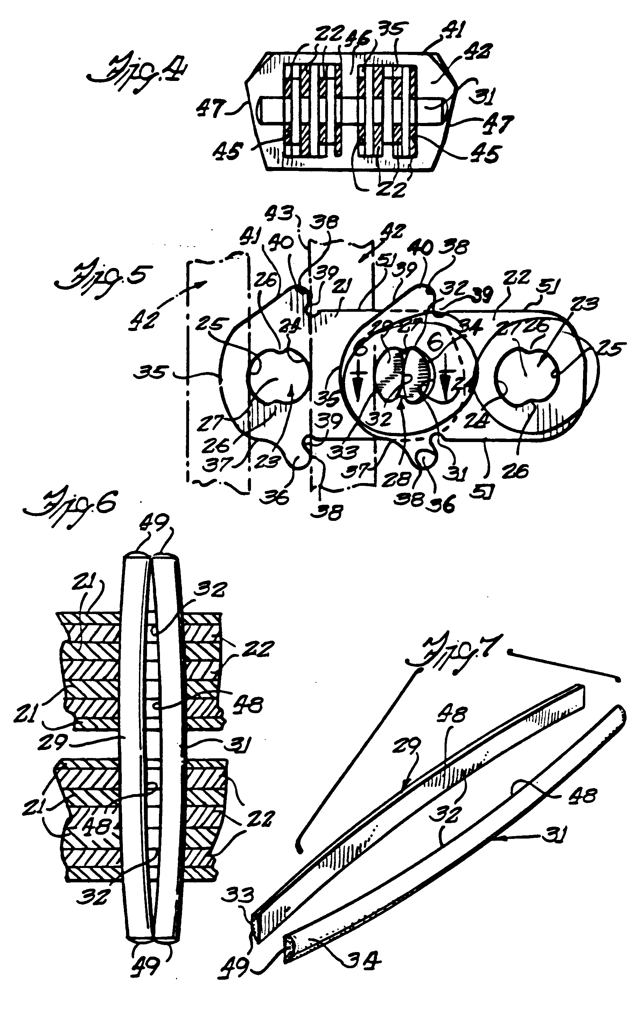

Figures 2 through 6 illustrate the power transmission chain-belt 19 of Figure 1 which is constructed of sets of links 21 that are interleaved with adjacent sets of links 22; each link 21 or 22 having a pair of spaced apertures 23,23. Each aperture 23 consists of a generally hour-glass shape having a pair of generally oppositely disposed rounded surfaces 24 and 25 separated by inward projections 26 forming a narrowed neck 27. The longitudinal axis of each aperture is rotated through approximately 4° from horizontal. The apertures in adjacent sets 21 and 22 of interleaved links are transversely aligned to receive pins forming an articulation or rocker joint 28 joining the adjacent sets of links and providing articulation therebetween. A rocker joint 28 comprises a pair of metal, generally D-shaped (in cross section) members or pins 29,31, each having a facing rocking surface 32 in contact with one another, and a pair of substantially semi-circular back surfaces 33, 34 respectively, which are generally conformably received in the link apertures 23. The rounded back surface 33 of pin 29 engages the surface 25 while the surface 34 of pin 31 is spaced from surface 24 of link 22 as seen in Figure 5, and the rocking surfaces 32 contact at the aperture neck 27 so that the members can rock on each other. Likewise, surface 34 of pin 31 engages surface 25 of the aperture 23 in link 21, axially aligned with the above aperture of link 22, while surface 33 of pin 29 is spaced from the surface 24. This arrangement will be repeated in adjacent openings of links 21,22 with the chain in tension.

Each link 21 or 22 is provided with a pair of oppositely disposed tabs or ears 36,40 adjacent one rounded end 35 of the link and generally laterally aligned with the aperture 23 adjacent that end of the link. An inwardly curved lower surface 37 leads from the link first end 35 to the lower tab 36 to terminate in a rounded end surface having a rearwardly facing flat surface 38 adapted to abut the side surface 43 of a load block 42. The tab is further provided with a rounded undercut surface 39 so arranged as to prevent interference with the assembly and operation of the load blocks thereon. An angularly inclined upper surface 41 extends from first end 35 to upper tab 40, also terminating in a rounded end surface with a flat rear surface 38 and undercut surface 39.

Metal drive or load blocks 42 encompass the chain-belt 19 between adjacent rocker joints 28, each load block consisting of a one-piece member or constructed of a plurality of substantially identical block parts 44. Each load block 42 is of a generally trapezoidal shape, when viewed from the front, and may have a central "window" or opening to accommodate the sets of links, or two or three windows. In the illustrated embodiment block 42 includes a pair of windows 45 separated by a central strut 46 (Figure 4) for receiving the chain-belt 19. Also, each block has oppositely disposed edges 47,47, which can be crowned or straight, acting to frictionally contact the correspondingly tapered flanges 15,16 and 17,18 of the pulleys, such as shown in Figure 1.

Figures 4 through 6 more clearly disclose the links 21 and 22 of the chain-belt 19 and the rocker joints 28 extending through the apertures 23 of the interleaved links and projecting beyond the outermost links as seen in Figures 3, 4 and 6. One or both of the D-shaped pins 29 and 31 are slightly bowed, as at 48, along the longitudinal axis of the pin, the extent of bowing being exaggerated in Figures 6 and 7. If both pins are bowed, they are bowed in opposite directions. The bowed pins press against the rounded surfaces 25 of the link apertures 23 in alternating links 21 and 22 and are, therefore, self-retaining. Due to the bowing, the outer ends 49 of the pins 29,31 bear against each other at the rocking surfaces 32. This load resulting from the bowing is sufficient to retain the pins in operative position during handling and assembly. In operation of the transmission, the chain tension acts to flatten out the pins against each other and provide full rocking face contact.

Although the bowing of the pins eliminates the use of spring or locking clips to retain the pins in position in handling of the chain-belt, the pins may shift laterally during belt operation so as to contact the pulley flange faces. To reduce any damage to the pulley flanges, the ends 49 of the pins may be rounded or radiused. That the pins contacted the pulley faces was evidenced by slight wear on the flange surfaces and/or polishing of the ends of the pins. Also, the tabs 36 and 40 on the links 21 and 22 prevent tipping or rocking of the load blocks 42 on the chain, especially during articulation. Also, the curved surfaces 37 of tabs 36 allow the load blocks and links to rotate and articulate as the chain is wrapped around a pulley. With substantial elimination of rocking of the load blocks, wear on the upper and lower edges 51 of the links is substantially reduced, resulting in a much longer life for the chain. The undercuts 39 on the tabs obviates any interference of the corners of the load blocks with the links for ease of assembly on the chain.

Another aspect of the invention is the use of ranks or sets of links in which the outermost two links in each set of links is different, that is, have a width substantially less than the width of the other links in the same set or rank. Fig. 6 shows that the outermost links of the ranks 21 are approximately one-half the width of the interior links. Because the outside links carry less load than the remaining inside links 21, it is possible to decrease the width and thus save the amount of metal for a chain, without diminishing the torque-carrying capacity of the total chain-belt.

## Claims

1. A power transmission chain belt (19) constructed of a plurality of sets of links (21) interleaved with adjacent sets of links (22), each link having a pair of longitudinally spaced apertures (23), the apertures of one set of links being transversely aligned with the apertures of an adjacent set of links, and a pair of pivot members (29,31) in each aligned set of apertures (23), the pivot members comprising pins (29,31) having opposite ends and of identical cross-section but with one reversed relative to the other to provide facing rocking surfaces (32), characterised in that at least one of said pins is longitudinally bowed (48) in a direction to space its centre portion (48) from the centre portion (48) of the other pin to retain the pivot pins in the aligned set of apertures through the set of links by frictional engagement of the bowed pin with the aperture edges.

2. A power transmission chain belt as set forth in claim 1, wherein said sets of links each have a pair of oppositely disposed outermost links, each of the pins (29,31) is longitudinally bowed (48) and the ends (49) of the pins (29,31) project beyond the outermost links.

3. A power transmission chain belt as set forth in claim 2, wherein both pins (29,31) are bowed (48) to the same extent.

4. A power transmission chain belt as set forth in claim 1, 2 or 3, wherein said longitudinal bowing (48) of the pins (29,31) separates the rocking surfaces (32) at their central portions (48) when the chain is unloaded and with said rocking surfaces (32) being in contact during chain operation.

5. A power transmission chain belt as set forth in any preceding claim, wherein at least one link (21) has an elongated body with the pair of longitudinally spaced apertures (23) provided adjacent the opposite ends thereof, each aperture having a generally hour-glass shape with enlarged rounded surfaces (24,25) joined by an intermediate neck portion (27), said enlarged rounded surfaces being adapted to receive the pins (29,31) therein.

6. A power transmission chain belt as set forth in claim 5, wherein each pin (29,31) has a rounded back surface (33,34) and each aperture has complementary thereto said rounded surface (24,25) cooperating with said pin back surface to prevent relative rotation therebetween.

7. A power transmission chain belt as set forth in any preceding claim, the chain being adapted for driving connection between driving and driven pulley members (11,12) having convergent pulley flanges (15,16,17,18) and having load blocks (42) shaped to receive said sets of links (21 or 22), at least one load block (42) being transversely disposed on each of said sets of links and extending generally parallel to the adjacent pivot pins (29,31), said load block having pulley flange engaging edges (47) spaced apart a predetermined distance, said pivot pins (29,31) having a length such that both ends thereof cannot simultaneously extend beyond the flange engaging edges (47) on both sides of the chain.

8. A power transmission chain belt as set forth in claim 7, when appendant to claim 5 or 6, wherein each link (21) has a pair of oppositely disposed outwardly extending tabs (36,40) adjacent one end of the link and adapted to prevent rocking of the load blocks (42) during articulation.

9. A power transmission chain belt as set forth in any preceding claim, wherein the links (21 or 22) in the link sets are provided with tabs (36,40) one of which having an angularly inclined upper surface (41) extending from a first end (35) of the link and terminating in a first upper tab (40) adjacent said first end of the link and generally laterally aligned with the aperture (23) at said first end, the other tab having an inwardly curved lower surface (37) extending from said first end (35) and terminating in a second lower tab (36) adjacent the first end of the link and generally laterally aligned with the aperture (23) at said first end, each of the oppositely disposed first upper and second lower tabs (40,36) having a rounded end surface, a flattened rear surface (38) and a rounded undercut surface (39) substantially aligned with an edge of the aperture (23) at said first end.

10. A power transmission chain belt as set forth in any preceding claim, wherein each aperture having said pair of spaced apertures (23), each being defined by a pair of rounded surfaces (24,25), one (25) of which has a smaller length than the other (24), the smaller rounded surface (25) being positioned outwardly of the centre of the link, the lengths of said rounded surfaces being defined by the defining walls of substantially identical inwardly extending portions which converge and extend inwardly of said apertures and short of the centre thereof, each pivot pin has a convex front surface (32) being said rocking surface and a rounded back surface (33,34), the facing rocking surfaces (32) of each pivot pin of said pair of pivot pins opposing and rocking on one another having a defined shape, the back surface (33,34) of each pivot member also having a defined shape, which is different, said shape of said back surface (33,34) matching that of the smaller rounded surface (25) of said apertures (23) so as to engage said apertures in one set of links (21) which apertures have the smaller rounded surface and with the back surface of said pin engaging said inwardly extending portion defining the smaller rounded surface (25), thus substantially preventing rotation of the pins so-engaged when the chain articulates, and the other of said pins being free of engagement with the walls of said apertures engaged by the other pin of the pair of pins, the pins of said pair of pins having the same relationship with the apertures in the next adjacent set of links which is interleaved with said one set of links.

11. A power transmission chain belt as set forth in claim 10, wherein said rocking surfaces (32) and back surfaces (33,34) are joined by curved surfaces.

12. A power transmission chain belt as set forth in any preceding claim, wherein said pivot members are D-shaped in cross-section.

13. A power transmission chain belt as set forth in any preceding claim, wherein at least one of said sets of links (21) has its two outermost links of a width substantially less than the width of the inner links between those two outermost links.

## Patentansprüche

1. Getriebe-Gliederkette (19) aus mehreren Gruppen von Gliedern (21), die abwechselnd zu angrenzenden Gruppen von Gliedern (22) angeordnet sind, wobei jedes Glied (2) in Längsrichtung beabstandete Öffnungen (23) aufweist, die Öffnungen einer Gruppe von Gliedern in Querrichtung zu den Öffnungen einer benachbarten Gruppe von Gliedern ausgerichtet ist und in jeder ausgerichteten Gruppe von Öffnungen (23) zwei Gelenkstücke (29,31) angeordnet sind, und zwar in Form von Zapfen (29,31) mit entgegengesetzten Enden und gleichem Querschnitt, wobei jedoch der eine relativ zum anderen umgekehrt ist, um einander zugewandte Schwenkflächen (32) zu bilden,
dadurch **gekennzeichnet,**
daß mindestens einer der Zapfen längsgekrümmt (48) ist in einer Richtung, in der sein zentraler Abschnitt (48) von dem zentralen Abschnitt (48) des anderen Zapfens beabstandet ist, um die Gelenkzapfen in der ausgerichteten Gruppe von Öffnungen durch die Gruppe von Gliedern hindurch durch Reibungsanlage des gekrümmten Zapfens an den Öffnungsrändern zu halten.

2. Getriebe-Gliederkette nach Anspruch 1,
bei der die besagten Gliedergruppen jeweils zwei entgegengesetzt angeordnete äußerste Glieder enthalten, wobei jeder der Zapfen (29,31) längs gekrümmt (48) ist und die Enden (49) der Zapfen (29,31) über die äußersten Glieder vorstehen.

3. Getriebe-Gliederkette nach Anspruch 2,
bei der beide Zapfen (29,31) im selben Ausmaß gekrümmt (48) sind.

4. Getriebe-Gliederkette nach Anspruch 1,2 oder 3,
bei der die Längskrümmung (48) der Zapfen (29,31) die Schwenkflächen (32) an ihren zentralen Abschnitten (48) trennt, wenn die Kette unbelastet ist und die Schwenkflächen (32) bei Betrieb der Kette in Berührung stehen.

5. Getriebe-Gliederkette nach einem der vorhergehenden Ansprüche,
bei der mindestens ein Glied (21) einen länglichen Körper hat, wobei die beiden in Längsrichtung beabstandeten Öffnungen (23) angrenzend an dessen entgegengesetzten Enden vorgesehen sind, wobei jede Öffnung im wesentlichen die Form eines Stundenglases mit erweiterten abgerundeten Flächen (24,25) hat, die durch einen dazwischen liegenden Halsabschnitt (27) verbunden sind, wobei die erweiterten abgerundeten Flächen zur Aufnahme der Zapfen (29,31) ausgebildet sind.

6. Getriebe-Gliederkette nach Anspruch 5,
bei der jeder Zapfen (29,31) eine abgerundete Rückseite (33,34) hat und jede Öffnung komplementär hierzu mit der besagten abgerundeten Fläche (24,25) versehen ist, die mit der Zapfen-Rückseite zusammenwirkt, um eine Relativdrehung zwischen diesen zu verhindern.

7. Getriebe-Gliederkette nach einem der vorhergehenden Ansprüche,
die als Antriebsverbindung zwischen einem treibenden und einem getriebenen Kettenrad (11,12) dient, welche mit konvergenten Radscheiben (15,16,17,18) und Lastblöcken (42) versehen sind, die zur Aufnahme der Gruppen von Gliedern (21 oder 22) ausgebildet sind, wobei mindestens ein Lastblock (42) querverlaufend auf jeder Gruppe von Gliedern angeordnet ist und sich im wesentlichen parallel zu den angrenzenden Gelenkzapfen (29,31) erstreckt, wobei der Lastblock mit Radscheiben erfassenden Rändern (74) versehen ist, die um einen vorgegebenen Betrag beabstandet sind, wobei die Gelenkzapfen (29,31) eine solche Länge haben, daß sich ihre beiden Enden nicht gleichzeitig über die Radscheiben erfassenden Ränder (47) auf beiden Seiten der Kette erstrecken können.

8. Getriebe-Gliederkette nach Anspruch 7, in Abhängigkeit von Anspruch 5 oder 6,
bei der jedes Glied (21) zwei entgegengesetzt angeordnete, nach außen ragende Ansätze (36,40) aufweist, die angrenzend an einem Ende des Gliedes angeordnet sind und eine Verschwenkung der Lastblöcke (42) während der Gelenkbewegung verhindern.

9. Getriebe-Gliederkette nach einem der vorhergehenden Ansprüche, bei der die Glieder (21 oder 22) in den Gliedergruppen mit Ansätzen (36,40) versehen sind, von denen einer eine geneigte obere Fläche (41) besitzt, die sich von einem ersten Ende (35) des Gliedes weg erstreckt und in einem ersten oberen Ansatz (40) endet, der an dem ersten Ende des Gliedes angrenzt und zu der Öffnung (23) an dem ersten Ende im wesentlichen seitlich ausgerichtet ist, während der andere Ansatz eine einwärts gekrümmte untere Fläche (37) besitzt, die sich von dem ersten Ende (35) weg erstreckt und in einen zweiten unteren Ansatz (36) mündet, der an dem ersten Ende des Gliedes angrenzt und zu der Öffnung (23) an dem ersten Ende im wesentlichen seitlich ausgerichtet ist, wobei jeder der entgegengesetzt angeordneten ersten oberen und zweiten unteren Laschen (40,36) eine abgerundete Endfläche, eine abgeflachte rückwärtige Fläche (38) und eine abgerundete hinterschnittene Fläche (39) besitzt, die zu einem Rand der Öffnung (23) an dem ersten Ende im wesentlichen ausgerichtet ist.

10. Getriebe-Gliederkette nach einem der vorhergehenden Ansprüche,
bei der jede der beiden beabstandeten Öffnungen (23) durch zwei abgerundete Flächen (24,25) definiert ist, von denen die eine (25) eine kleinere Länge als die andere (24) hat, die kleinere abgerundete Fläche (25) außerhalb der Mitte des Gelenkes angeordnet ist, die Längen der abgerundeten Flächen durch die Wände von im wesentlichen identischen einwärts verlaufenden Abschnitten definiert sind, die konvergieren und sich ins Innere der Öffnungen bis vor deren Mitte erstrecken, wobei jeder Gelenkzapfen eine die Schwenkfläche bildende konvexe Vorderseite (32) und eine abgerundete Rückseite (33,34) besitzt, die einander zugewandten Schwenkflächen (32) jedes Gelenkzapfens der beiden Gelenkzapfen, die entgegengesetzt gerichtet sind und aufeinander verschwenken, eine definierte Form haben, die Rückseite (33,34) jedes Gelenkstücks ebenfalls eine definierte Form hat, die verschieden ist, wobei die Form der Rückseite (33,34) an die der kleineren abgerundeten Fläche (25) der Öffnungen (23) angepaßt ist, um die Öffnungen in einer Gruppe der Glieder (21) zu erfassen, welche Öffnungen die kleinere, abgerundete Fläche besitzen, wobei die Rückseite des Zapfens, an dem die kleinere abgerundete Fläche (25) definierenden einwärts verlaufenden Abschnitt anliegt, wodurch eine Drehung der so erfaßten Zapfen bei einer Gelenkbewegung der Kette verhindert wird, und der andere der Zapfen außer Eingriff mit den Wänden der Öffnungen steht, die von dem anderen Zapfen des Zapfenpaares erfaßt wird, wobei die Zapfen des Zapfenpaares die gleiche Beziehung zu den Öffnungen in der nächsten angrenzenden Gruppe von Gliedern haben, welche sich mit der besagten einen Gliedergruppe abwechselt.

11. Getriebe-Gliederkette nach Anspruch 10,
bei der die Schwenkflächen (32) und Rückseiten (33,34) durch gekrümmte Flächen verbunden sind.

12. Getriebe-Gliederkette nach einem der vorhergehenden Ansprüche,
bei der die Schwenkstücke einen D-förmigen Querschnitt haben.

13. Getriebe-Gliederkette nach einem der vorhergehenden Ansprüche,
bei der die beiden äußersten Glieder mindestens einer Gliedergruppe (21) eine Breite hat, die wesentlich kleiner als die Breite der inneren Glieder zwischen diesen beiden äussersten Gliedern ist.

## Revendications

1. Courroie articulée (19) pour transmission de puissance constituée d'une multitude de jeux de maillons (21) entremêlés avec des jeux contigus de maillons (22), chaque maillon ayant deux ouvertures (23) espacées longitudinalement l'une de l'autre, les ouvertures d'un jeu de maillons étant en alignement transversal avec les ouvertures d'un jeu contigu de maillons, et deux éléments de pivot (29, 31) dans chaque jeu aligné d'ouvertures (23), les éléments de pivot comprenant des axes (29, 31) ayant des extrémités opposées et présentant une section transversale identique mais avec l'une inversée par rapport à l'autre pour fournir des surfaces de basculement en regard (32), caractérisée en ce qu'au moins l'un desdits axes est cambré longitudinalement (48) dans une direction de façon à espacer sa partie centrale (48) de la partie centrale (48) de l'autre axe afin de maintenir les axes des pivots du jeu aligné d'ouvertures à travers le jeu de maillons par contact par frottement de l'axe cambré avec les bords de l'ouverture.

2. Courroie articulée pour transmission de puissance selon la revendication 1, dans laquelle lesdits jeux de maillons ont chacun deux maillons les plus à l'extérieur disposés en étant opposés, chacun des axes (29, 31) est cambré longitudinalement (48) et les extrémités (49) des axes (29, 31) sont en saillie au-delà des maillons les plus à l'extérieur.

3. Courroie articulée pour transmission de puissance selon la revendication 2, dans laquelle les deux axes (29, 31) sont cambrés (48) au même degré.

4. Courroie articulée pour transmission de puissance selon la revendication 1, 2 ou 3, dans laquelle ledit cambrage longitudinal (48) des axes (29, 31) sépare les surfaces de basculement (32) à leurs parties centrales (48) lorsque la courroie est à vide, lesdites surfaces de basculement (32) étant en contact pendant le fonctionnement de la courroie.

5. Courroie articulée pour transmission de puissance selon l'une quelconque des revendications précédentes, dans laquelle au moins un maillon (21) comporte un corps allongé avec les deux ouvertures espacées longitudinalement l'une de l'autre (23) contiguës à ses extrémités opposées, chaque ouverture ayant la forme générale d'un sablier avec des surfaces arrondies agrandies (24, 25) réunies par une partie rétrécie intermédiaire (27), lesdites surfaces arrondies agrandies étant destinées à recevoir les axes (29, 31)

6. Courroie articulée pour transmission de puissance selon la revendication 5, dans laquelle chaque axe (29, 31) a une surface arrière arrondie (33, 34) et chaque ouverture comporte ladite surface arrondie complémentaire (24, 25) qui coopère avec ladite surface arrière de l'axe pour éviter une rotation relative entre elles.

7. Courroie articulée pour transmission de puissance selon l'une quelconque des revendications précédentes, la courroie étant destinée à une liaison motrice entre des éléments de poulies motrice et menée (11, 12) ayant des flasques de poulie convergents, (15, 16, 17, 18) et comportant des blocs de charge (42) façonnés de manière à recevoir lesdits jeux de maillons (21 ou 22), au moins un bloc de charge (42) étant disposé transversalement sur chacun desdits jeux de maillons et s'étendant généralement parallèlement aux axes de pivot contigus (29, 31), ledit bloc de charge ayant un flasque de poulie en contact avec les bords (47) espacés d'une distance prédéterminée, lesdits axes de pivotement (29, 31) ayant une longueur telle que leurs deux extrémités ne peuvent s'étendre simultanément au-delà des bords (47) de venue en contact avec les flasques aux deux côtés de la courroie.

8. Courroie articulée pour transmission de puissance selon la revendication 7, lorsqu'elle est dépendante de la revendication 5 ou de la revendication 6, dans laquelle chaque maillon (21) comporte deux pattes (36, 40) s'étendant vers l'extérieur, disposées en étant opposées, contiguës à une extrémité du maillon et destinées à empêcher le basculement des blocs de charge (42) pendant l'articulation.

9. Courroie articulée pour transmission de puissance selon l'une quelconque des revendications précédentes, dans laquelle les maillons (21 ou 22) des jeux de maillons comportent des pattes (36, 40), l'une d'elles ayant une surface supérieure (41) inclinée angulairement qui s'étend à partir d'une première extrémité (35) du maillon et se termine dans une première patte supérieure (40) contiguë à ladite première extrémité du maillon et en étant alignée généralement latéralement avec l'ouverture (23) au droit de ladite première extrémité, l'autre patte ayant une surface inférieure (37) incurvée vers l'intérieur qui s'étend à partir de ladite première extrémité (35) et se termine dans une seconde patte inférieure (36) contiguë à la première extrémité du maillon et en étant en alignement généralement latéral avec l'ouverture (23) au droit de ladite première extrémité, chacune de la première patte supérieure et de la seconde patte inférieure disposées en étant opposées (40, 36) ayant une surface extrême arrondie, une surface arrière aplatie (38) et une surface à contre-dépouille arrondie (39) pratiquement en alignement avec un bord de l'ouverture (23) au droit de ladite première extrémité.

10. Courroie articulée pour transmission de puissance selon l'une quelconque des revendications précédentes, dans laquelle chaque ouverture desdites deux ouvertures espacées (23) est définie par deux surfaces arrondies (24, 25) dont l'une (25) a une longueur plus petite que l'autre (24), la surface arrondie plus petite (25) étant placée à l'extérieur du centre du maillon, les longueurs desdites surfaces arrondies étant définies par les parois de définition de parties s'étendant vers l'intérieur, sensiblement identiques, qui convergent et s'étendent vers l'intérieur desdites ouvertures et en-deçà de leur centre, chaque axe de pivotement comporte une surface avant convexe (32) qui est ladite surface de basculement et une surface arrière arrondie (33, 34), les surfaces de basculement en regard (32) de chaque axe de pivotement desdits deux axes de pivotement étant opposées et basculant l'une sur l'autre ayant une forme définie, la surface arrière (33, 34) de chaque élément de pivot ayant aussi une forme définie, qui est différente, ladite forme de ladite surface arrière (33, 34) étant apariée à celle de la surface arrondie plus petite (25) desdites ouvertures (23) de manière à être en contact avec lesdites ouvertures dans un jeu de maillons (21), ouvertures qui ont la surface arrondie plus petite et avec la surface arrière dudit axe en contact avec ladite partie s'étendant vers l'intérieur qui définit la surface arrondie plus petite (25), ce qui a pour effet de pratiquement empêcher la rotation des axes ainsi engagés lorsqu'il y a articulation de la courroie, et l'autre desdits axes étant libre de contact avec les parois desdites ouvertures dans lesquelles s'est engagé l'autre des deux axes, lesdits deux axes ayant la même relation avec les ouvertures du jeu contigu suivant de maillons qui est entremêlé avec ledit jeu de maillons.

11. Courroie articulée pour transmission de puissance selon la revendication 10, dans laquelle lesdites surfaces de basculement (32) et les surfaces arrière (33, 34) sont réunies par des surfaces incurvées.

12. Courroie articulée pour transmission de puissance selon l'une quelconque des revendications précédentes, dans laquelle lesdites éléments de pivot ont la forme d'un D en section transversale.

13. Courroie articulée pour transmission de puissance selon l'une quelconque des revendications précédentes, dans laquelle au moins l'un desdits jeux de maillons (21) a ses deux maillons les plus à l'extérieur qui présentent une largeur sensiblement inférieure à celle des maillons intérieurs entre ces deux maillons les plus à l'extérieur.
